# FASCICULE DE BREVET EUROPEEN

(11) **EP 2 227 384 B1**
(45) Date de publication et mention de la délivrance du brevet: **18.05.2011**
(21) Numéro de dépôt: 08852295.8
(22) Date de dépôt: 17.11.2008
(51) Int. Cl.: B31D 3/02

(54) **PROCEDE DE FABRICATION D'UNE STRUCTURE FIBREUSE ALVEOLAIRE**
VERFAHREN ZUR HERSTELLUNG EINER ZELLENFÖRMIGEN FASERSTRUKTUR
METHOD FOR PRODUCING A CELLULAR FIBROUS STRUCTURE

(30) Priorité: 19.11.2007 FR 0759149
(43) Date de publication de la demande: 15.09.2010
(73) Titulaire: Commissariat à l'Énergie Atomique et aux Énergies Alternatives, 75015 Paris (FR)
(72) Inventeur: DAVID, Patrick, F-37540 Saint Cyr Sur Loire (FR)
(74) Mandataire: Ilgart, Jean-Christophe
(86) Numéro de dépôt international: PCT/EP2008/065638
(87) Numéro de publication internationale: WO 2009/065794

(56) Documents cités:
- EP-A- 0 286 004
- FR-A- 2 782 941
- FR-A- 2 818 578
- US-A- 5 256 476

## Description

### DOMAINE TECHNIQUE

L'invention concerne un procédé de fabrication d'une structure fibreuse alvéolaire, en particulier une structure fibreuse en nid d'abeilles (NIDA), comprenant des alvéoles dont les parois sont constituées de fibres continues.

### ÉTAT DE LA TECHNIQUE ANTÉRIEURE

Une structure en nid d'abeilles, également appelée structure NIDA, est une structure alvéolaire constituée de cylindres creux accolés les uns aux autres et disposés selon un motif. Généralement, les cylindres ont une base hexagonale et sont disposés selon un motif hexagonal, mais d'autres formes de base et de motifs sont également possibles. Cette disposition en nid d'abeilles confère à la structure des caractéristiques mécaniques élevées, en particulier une grande résistance mécanique, tout en restant légère.

Les structures NIDA composites sont définies à partir de leurs éléments constitutifs, c'est-à-dire des fibres et de leur matrice. Les fibres apportent les propriétés mécaniques à la structure NIDA. La matrice quant à elle est la matière présente entre les fibres et a pour fonction de lier les fibres entre elles : c'est la matrice qui confère sa cohésion à la structure.

Les structures NIDA composites sont classées en fonction de leurs matrices : organique, céramique ou métallique.

Deux techniques classiques permettent de réaliser des structures NIDA à matrice organique (voir le document [1] référencé à la fin de la description) :
- la technique de l'expansion,
- la technique de la mise en forme de plaques ondulées.

La première technique (technique de l'expansion) consiste à utiliser un matériau tissé comprenant des fibres (par exemple un tissu de fibres pré-imprégné de résine), de le découper sous forme de feuilles de dimensions égales et à déposer des lignes parallèles de résine ou de colle sur ces feuilles. Le matériau utilisé pour les feuilles est le matériau qui va constituer les parois des alvéoles de la structure NIDA.

La largeur des lignes de résine ou de colle correspond à la largeur d'une paroi d'une alvéole de la future structure NIDA, tandis que l'espacement entre deux lignes adjacentes correspond à trois fois la largeur d'une paroi. A chaque nouvelle feuille, les zones encollées sont décalées de deux largeurs de parois par rapport à la feuille précédente.

Ces feuilles sont ensuite empilées les unes sur les autres et l'empilement subit un traitement thermique, éventuellement réalisé sous pression, ce qui permet à la résine ou à la colle de se polymériser et de créer des liaisons entre les feuilles. Ainsi, chaque feuille est en contact avec la feuille supérieure et avec la feuille inférieure sur un quart de sa surface.

L'empilement obtenu est ensuite découpé en bandes de largeur déterminée et chaque bande est ensuite dépliée dans le sens de l'épaisseur de l'empilement jusqu'à obtenir des alvéoles hexagonales. Un traitement thermique permet de polymériser la résine et d'obtenir un matériau rigide.

La seconde technique (technique de mise en forme de plaques ondulées) peut s'appliquer à divers matériaux qui sont sous forme de feuilles et qui sont déformables (métal, plastique, tissu).

Les feuilles en matériau déformable sont mises en forme soit par emboutissage en température et passage entre des rouleaux présentant un relief d'ondulations en surface (pour les feuilles métalliques ou plastiques), soit par placement dans des moules ayant un profil ondulé et injection de résine (pour les feuilles sous forme de tissus).

Les plaques ondulées ainsi obtenues sont ensuite collées les unes aux autres au niveau de leurs parties proéminentes afin de former des alvéoles.

La mise en oeuvre des deux techniques citées ci-dessus est assez simple et peu coûteuse. Ces deux techniques présentent cependant les inconvénients suivants :
- les épaisseurs des parois des structures NIDA ainsi obtenues ne sont pas constantes puisqu'une paroi sur trois est deux fois plus épaisse que la précédente et la suivante (ce qui correspond à la zone de contact entre deux feuilles ou deux plaques ondulées adjacentes) ;
- il n'y a pas de fibres liant une feuille à l'autre, ce qui rend la structure moins résistante. En particulier, il y a des risques de délaminage (ouverture) au niveau des arêtes des alvéoles qui correspondent à la jonction de deux feuilles adjacentes ;
- la précision sur les dimensions des alvéoles ne peut être supérieure à 3/10^{ème} de mm, à cause des opérations de collage et de mise en forme des feuilles ;
- il n'est pas possible (pour le tiers des parois) d'obtenir une épaisseur de paroi inférieure à deux épaisseurs de feuilles, soit une épaisseur d'environ 600 µm avec des feuilles en tissus classiques.

D'autre part, il peut être avantageux de réaliser des structures NIDA à matrice céramique ou carbone car elles peuvent être employées à haute température et peuvent posséder une plus grande rigidité que les structures NIDA à matrice organique.

Les structures composites NIDA à matrice carbone ou céramique peuvent être obtenues à partir d'une structure composite NIDA à matrice organique réalisée à l'aide d'un des procédés exposés ci-dessus.

Le document [2] décrit par exemple la formation d'une structure NIDA carbone/carbone, obtenue par pyrolyse d'une structure NIDA comportant des fibres de carbone et une matrice organique thermodurcissable (la matrice organique est ici choisie de sorte que sa pyrolyse produise un taux de carbone élevé). Le problème de cette méthode est que la matrice de la structure ainsi obtenue est relativement peu dense et comporte des fissures. Afin de consolider et de densifier la structure, il est alors nécessaire d'introduire du carbone dans la structure en utilisant la technique classique de l'Infiltration Chimique en Phase Vapeur (CVI). Le carbone peut éventuellement être remplacé par du carbure de silicium si la structure doit être employée à haute température en conditions oxydantes.

Les structures obtenues par cette technique présentent les mêmes inconvénients que ceux propres aux structures NIDA à matrice organique (comme cités ci-dessus), étant donné que les structures sont obtenues à partir d'une structure NIDA à matrice organique et conservent donc les défauts d'épaisseurs, de précisions dans les dimensions et d'absence de fibres de jonction (entre les parois des alvéoles).

Par ailleurs, la pyrolyse transforme la résine thermodurcissable en carbone poreux, mais le carbone poreux obtenu comporte peu de chemins d'accès ; la densification CVI ne peut donc pas par la suite atteindre le coeur du matériau des fibres (on reste en surface des fibres). Les propriétés mécaniques (en particulier, de résistance) des structures NIDA obtenues par cette technique sont par conséquent beaucoup moins élevées que celles des structures NIDA complètement densifiées par CVI.

D'autre part, cette technique ne permet pas d'obtenir des structures NIDA céramique performantes, comme par exemple des structures SiC/SiC. En effet, pour réaliser un composite SiC/SiC performant, il est nécessaire de déposer une couche de carbone très fine (de quelques centaines de nanomètres) par CVI directement sur les fibres de carbure de silicium, avant de procéder à la densification par le carbure de silicium. Cette couche joue alors un rôle prépondérant dans les performances de la structure SiC/SiC en permettant la déviation des fissures et l'adaptation des forces d'adhésion entre les fibres et la matrice. Or seuls les dépôts de carbone obtenus par voie gazeuse possèdent ces propriétés. Lorsque de la matière pyrolysée est présente en surface des fibres, ce qui est le cas avec la technique considérée, il n'est alors plus possible de déposer les couches de carbone recherchées.

Une autre méthode permet d'obtenir des structures à matrice céramique et elle est décrite dans le document [3]. Cette méthode consiste à réaliser des découpes de fentes parallèles dans un feutre (ou dans une structure aiguilletée), puis à faire pénétrer dans ces fentes des tiges hexagonales expansibles latéralement. Ces tiges expansibles peuvent être, par exemple, des éléments gonflables avec un gaz.

Lors de l'expansion des tiges, les fibres du feutre sont déplacées et épousent les contours des tiges pour former des alvéoles ayant une base hexagonale.

Le feutre peut être imprégné de résine ou d'un précurseur céramique avant la formation des alvéoles. La polymérisation de la résine ou du précurseur permet alors de consolider la structure. La structure NIDA ainsi obtenue est par la suite pyrolysée afin d'obtenir une structure à matrice carbone ou céramique.

Les structures obtenues par cette technique ne présentent pas de problèmes de délaminage étant donné que les fibres traversent l'ensemble des parois de la structure. Cependant, les inconvénients cités ci-dessous apparaissent.

Comme les alvéoles sont obtenues en étirant un feutre suivant une direction perpendiculaire à des fentes, le volume total de la structure est multiplié par un facteur d/e (où d est la distance entre deux parois et e est l'épaisseur de la paroi) par rapport au volume initial du feutre. La densité des fibres dans les parois est donc augmentée, en moyenne, d'un facteur d/e par rapport à la densité du feutre. Ce procédé oblige donc à réaliser au préalable des feutres de densité donnée, si l'on souhaite maîtriser le taux de fibres moyen dans les parois et, en particulier, atteindre la valeur maximale du taux tout en respectant une épaisseur précise pour les parois de la structure NIDA finale. Or, pour les fibres céramiques, telles que les fibres de SiC, les fabricants ne proposent que des feutres d'une seule densité (environ 0,1). Ce procédé ne laisse donc aucune possibilité de choisir l'épaisseur des parois de la structure pour un taux de fibres fixé.

Par ailleurs, une partie des fibres est coupée lors du découpage des fentes, et une autre partie des fibres subit des arrachages lors des étirements. La fraction des fibres endommagée est d'autant plus importante que la taille des alvéoles hexagonales est importante et que l'épaisseur des parois est faible (en effet, ce sont la taille des alvéoles et l'épaisseur des parois qui conditionnent la distance entre deux traits de coupe). La fraction des fibres endommagées est également d'autant plus importante que les fibres sont plus rigides. Cela a pour conséquence de dégrader les propriétés mécaniques de la structure NIDA obtenue.

Enfin, l'étirement n'est pas uniforme dans toutes les directions. En effet, l'étirement ne se fait que suivant trois directions qui font respectivement un angle de 0°, +30° ou -30° avec les axes des parois de la structure NIDA, ce qui conduit à obtenir des taux de fibres différents suivant les orientations des parois.

Il est à noter que les structures NIDA peuvent être utilisées pour réaliser des panneaux présentant une structure alvéolaire en collant sur la face supérieure et/ou sur la face inférieure des structures NIDA une ou plusieurs plaques (par exemple des feuilles) de tissu pré-imprégné de résine et en effectuant une polymérisation de l'ensemble ainsi obtenu. Par exemple, si on utilise une structure NIDA carbone/carbone, les faces de cette structure peuvent être recouvertes à l'aide de plaques de fermeture, constituées de plusieurs épaisseurs de tissus de carbone imprégnés de résine. L'ensemble est ensuite pyrolysé.

Le but de l'invention est de fournir un procédé de fabrication permettant d'obtenir une structure alvéolaire (par exemple une structure à nid d'abeilles) qui ne présente pas les inconvénients de l'art antérieur, c'est-à-dire une structure dont les parois sont résistantes et ont une épaisseur et une densité constantes et maîtrisées.

### EXPOSÉ DE L'INVENTION

L'invention a pour objet un procédé de fabrication d'une structure alvéolaire comprenant des alvéoles séparées par des parois. Le procédé comprend les étapes suivantes :
- réalisation d'un dispositif de maintien comprenant des tiges reproduisant la forme des alvéoles, les tiges étant séparées par des gorges reproduisant la forme des parois,
- placement de fibres continues dans les gorges pour constituer les parois, chaque fibre étant placée dans plusieurs gorges successives adjacentes,
- formation d'une matrice autour des fibres de manière à lier les fibres entre elles.

La mise en place d'une fibre continue dans les gorges du dispositif de maintien, c'est-à-dire dans des volumes équivalents aux parois de la structure à réaliser, permet d'obtenir une homogénéité au niveau de l'épaisseur des parois, ainsi qu'une meilleure résistance mécanique des parois. En effet, une seule et même fibre appartient à plusieurs parois adjacentes : les parois sont donc reliées entre elles par des fibres.

Il est à noter que la formation de la matrice autour des fibres permet de créer une cohésion entre les fibres.

Avantageusement, le procédé comprend en outre, après l'étape de formation d'une matrice, une étape d'élimination du dispositif de maintien.

Avantageusement, le procédé de fabrication comprend en outre, après l'étape de placement de fibres continues dans les gorges du dispositif de maintien et avant l'étape de formation d'une matrice autour des fibres, une étape de tassement des fibres dans les gorges du dispositif de maintien.

Selon une variante, le placement est réalisé avec au moins une seule et même fibre continue qui parcourt n fois de part en part le dispositif de maintien, avec n ≥ 1.

Avantageusement, le placement est réalisé avec au moins une seule et même fibre continue qui parcourt toutes les gorges du dispositif de maintien.

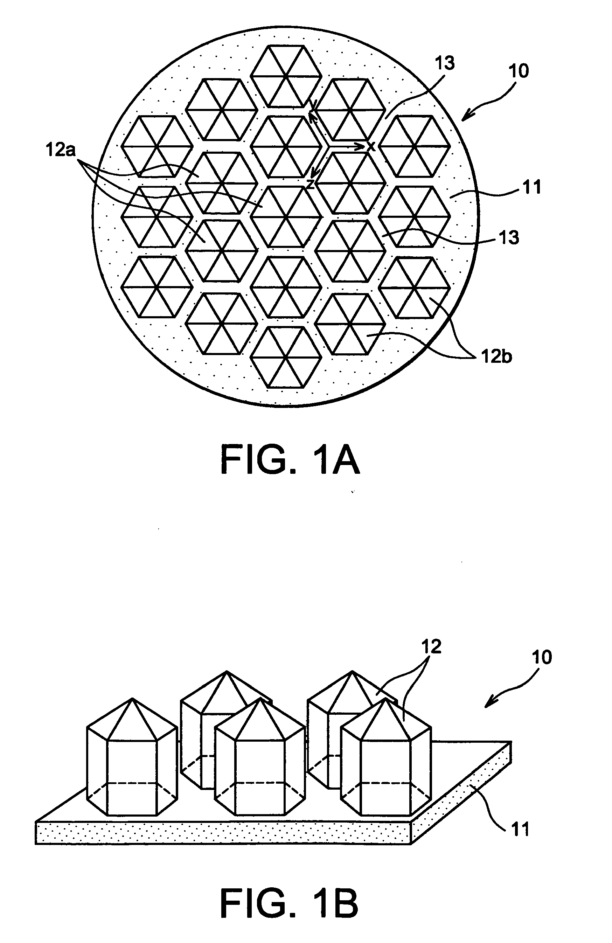

Avantageusement, l'étape de placement des fibres comprend les étapes suivantes :
- soit une gorge donnée appelée gorge x (voir la figure 1A), placement d'une fibre continue dans les gorges d'orientation moyenne 90° par rapport à la gorge x,
- placement d'une fibre continue dans les gorges d'orientation moyenne -30° par rapport à la gorge x,
- placement d'une fibre continue dans les gorges d'orientation moyenne +30° par rapport à la gorge x,
une orientation moyenne de θ° correspondant à une orientation de θ à + ou - 30°.

Plusieurs cycles de placement des fibres dans les trois directions sont réalisés jusqu'à obtenir la hauteur de la structure recherchée.

D'autres cheminements de fibres, longeant trois côtés de chaque hexagone par exemple, peuvent être employés.

Selon une première variante, chaque gorge du dispositif de maintien comprend une seule fibre dans son épaisseur. La largeur des gorges est donc adaptée pour ne pouvoir contenir qu'une seule fibre.

Selon une seconde variante, ce n'est pas une mais plusieurs fibres qui sont placées en même temps dans les gorges. L'ensemble de fibres a ainsi une épaisseur qui peut être adaptée à la largeur des gorges du dispositif de maintien.

Il est bien entendu que plusieurs fibres peuvent être placées dans les gorges simultanément, en fonction de la largeur des gorges.

Avantageusement, les alvéoles sont des cylindres ayant une base hexagonale.

Avantageusement, les tiges du dispositif de maintien sont disposées selon un motif hexagonal. Ici, lorsque l'on fait référence à un motif hexagonal, on se réfère au motif que forment plusieurs tiges adjacentes, par exemple un groupe de 7 tiges adjacentes. En fait, les tiges sont disposées de manière régulière selon un motif, différent selon la forme de la base des tiges, afin que les gorges ainsi créées entre les tiges puissent être remplies par des fibres et former une structure en nid d'abeille déterminée.

Avantageusement, les tiges du dispositif de maintien reposent sur un support, ce support étant de forme plane, conique ou cylindrique. En fait, les tiges du dispositif de maintien sont disposées sur un support plan lorsqu'on souhaite obtenir une structure NIDA plane. Au contraire, lorsqu'on souhaite obtenir des structures NIDA de forme cylindrique, conique..., les tiges du dispositif de maintien sont disposées sur des supports possédant la forme recherchée (cylindre, cône...). On précise que, quelque soit la forme du support, les tiges sont disposées essentiellement perpendiculairement à la surface du support.

Les tiges du dispositif de maintien peuvent être en carbone, en métal ou tout autre matériau compatible avec les conditions d'élaboration.

Avantageusement, les tiges du dispositif de maintien sont revêtues de tissus ou de tresses constituées de fibres ; cela permet d'ajouter des fibres dans un plan vertical, tout en respectant l'épaisseur totale des parois et en conservant un taux de fibres constant.

Avantageusement, le procédé de fabrication comprend en outre, après l'étape de formation d'une matrice autour des fibres, les étapes suivantes :
- placement d'un renfort fibreux sur une ou deux faces de la structure de manière à recouvrir les extrémités des alvéoles de la structure,
- fixation du renfort fibreux sur ladite ou lesdites face(s), par exemple par insertion de filaments ou de fibres traversant le renfort fibreux et les parois des alvéoles de la structure.

En plaçant un renfort fibreux sur la structure, on peut fermer et obstruer les extrémités des alvéoles. Le renfort fibreux peut posséder une forme plane, cylindrique ou conique, adaptée à la surface des parois de la structure alvéolaire. Le renfort fibreux peut être un élément tissé plan, un feutre ou analogue.

Avantageusement, lorsque le dispositif de maintien doit être enlevé au cours du procédé de fabrication, le placement du renfort fibreux sur une ou deux faces de la structure peut être réalisé après l'étape d'élimination du dispositif de maintien. Avantageusement, le placement du renfort fibreux peut également être réalisé avant l'étape d'élimination du dispositif de maintien. Cette élimination peut dans ce cas avoir lieu en effectuant un traitement thermique de l'ensemble de l'objet (structure alvéolaire et dispositif de maintien).

Selon un mode de réalisation particulier, la structure alvéolaire est une structure en nid d'abeilles (NIDA). De préférence, les alvéoles de la structure NIDA ont une section de forme hexagonale.

Selon un autre mode de réalisation particulier, la structure alvéolaire est une structure dont les alvéoles ont une section de forme triangulaire ou parallélépipédique (carré, rectangle ou losange).

En fait, la structure alvéolaire peut être toute structure dont les alvéoles peuvent être réalisées par le placement de fibres continues dans des gorges reproduisant la forme des parois des alvéoles (lignes droites ou courbes s'entrecroisant, à motifs périodiques ou non).

Le procédé selon l'invention permet d'obtenir, selon la nature des fibres et de la matrice utilisées, une structure alvéolaire (par exemple une structure NIDA) constituée de fibres continues organiques, inorganiques (verre), céramiques ou carbones et d'une matrice organique, céramique ou carbone.

Selon une première variante, la matrice est obtenue par injection d'un composé thermoplastique entre les fibres placées dans le dispositif de maintien à une température inférieure à la température de stabilité des fibres (c'est-à-dire une température inférieure à la température jusqu'à laquelle les fibres conservent leurs propriétés) et supérieure à la température de fusion du composé thermoplastique. Par exemple, pour des fibres de verre type E et du polypropylène, comme composé thermoplastique, la température de stabilité est de 600°C et la température de fusion est de 200°C.

Selon une seconde variante, la matrice est obtenue par injection d'une résine thermodurcissable entre les fibres placées dans le dispositif de maintien et chauffage de l'ensemble ainsi obtenu jusqu'à polymérisation de la résine.

Selon une autre variante, l'étape de formation d'une matrice comprend une étape de densification des parois de la structure par CVD ou CVI de gaz. Le gaz utilisé peut être du méthane ou de l'hydrogène pour obtenir une matrice de carbone, ou du méthyltrichlorosilane et de l'hydrogène pour obtenir une matrice de carbure de silicium.

Le procédé de fabrication selon l'invention permet, contrairement aux techniques classiques connues, de fabriquer des structures alvéolaires (par exemple des structures en nid d'abeilles) qui possèdent les caractéristiques suivantes :
- les parois ont toutes la même épaisseur et le taux de fibres dans les parois est constant ;
- on peut obtenir des parois ayant une épaisseur très mince, c'est-à-dire jusqu'à quelques centaines de µm ;
- on obtient une précision géométrique très élevée ; en effet, les dimensions de la section d'une alvéole (par exemple les dimensions de l'hexagone dans le cas d'une structure NIDA) sont précises à + ou - 5/100^{èmes} de millimètre près et les parois des alvéoles sont verticale par rapport à leur base (par rapport à la base hexagonale dans le cas d'une structure NIDA) à + ou - 0,5 degrés près ;
- les structures peuvent être réalisées en utilisant des fibres difficilement tissables ou non tissables du fait de leur extrême raideur ou de leur grande fragilité (on peut par exemple utiliser des
fibres céramiques de haut module tyranno SA3 ou des fibres de résistance faible).

Un autre avantage du procédé selon l'invention est que la matrice de la structure alvéolaire (par exemple en nid d'abeilles) peut éventuellement être complètement déposée par voie gazeuse. L'absence de dépôt pyrolysé sur les fibres rend en particulier possible la réalisation de structures alvéolaires (par exemple NIDA) à matrice céramique (SiC) avec une interface en carbone. On peut ainsi obtenir des matériaux plus performants que ceux obtenus par les procédés connus de l'art antérieur.

Les structures alvéolaires (par exemple les structures NIDA) obtenues à partir du procédé de fabrication selon l'invention possèdent des caractéristiques (résistance...) leur permettant d'être utilisées comme gaines de combustibles nucléaires pour les centrales de 4^{ème} génération. En effet, ces structures doivent pouvoir fonctionner à des températures élevées (de l'ordre de 1000°C), posséder de bonnes propriétés mécaniques et thermiques, et confiner les produits de réaction gazeux (pression jusqu'à 100 bar dans les alvéoles). La structure alvéolaire (par exemple une structure en nids d'abeille) obtenue selon le procédé de fabrication de l'invention peut donc être utilisée en tant que gaine de combustible.

Ces structures peuvent également être utilisées dans les domaines aéronautique et spatial

(par exemple, les pièces de structuration, les pièces pour absorber des chocs ou des sons) et dans l'industrie des hautes températures (par exemple, les échangeurs thermiques et les isolants thermiques). Ainsi, la structure alvéolaire (par exemple une structure en nids d'abeille) obtenue selon le procédé de fabrication de l'invention peut être utilisée comme absorbeur de sons, afin d'atténuer ou de soustraire les vibrations phoniques.

### BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels :
- les figures 1a et 1b représentent respectivement une vue de dessus et une vue partielle longitudinale en perspective d'un dispositif de maintien utilisé pour réaliser une structure NIDA selon l'invention ;
- la figure 2 représente une grille permettant de tasser les fibres dans les gorges hexagonales du dispositif de maintien illustré dans les figures 1a et 1b ;
- les figures 3a, 3b et 3c illustrent les étapes successives de placement de fibres dans les gorges du dispositif de maintien illustré dans les figures 1a et 1b.

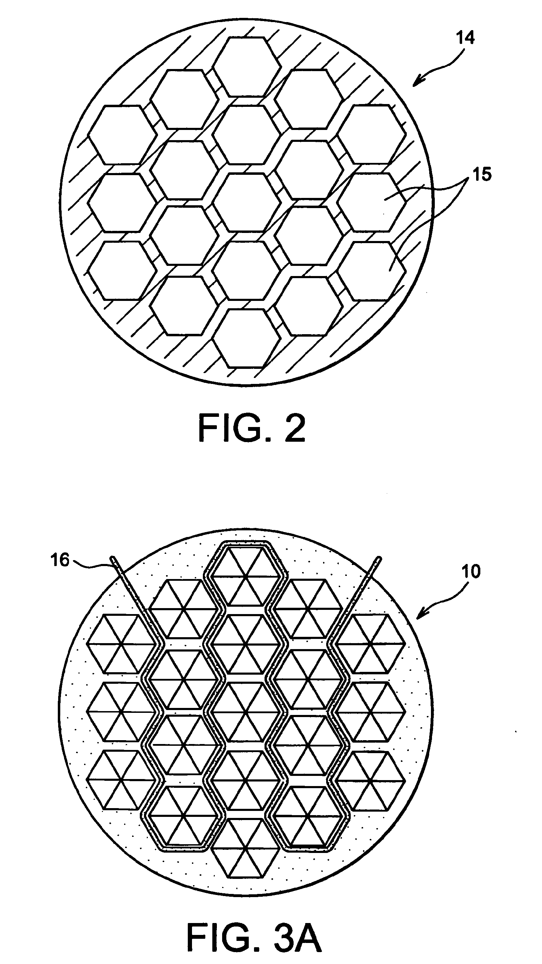

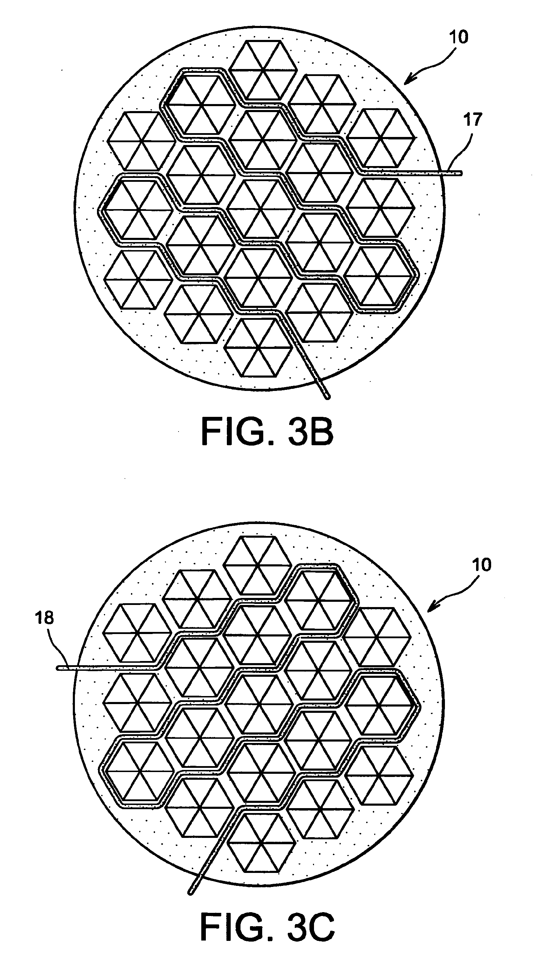

Il est à noter que par soucis de simplification, la fibre déjà placée au cours de l'étape illustrée dans la figure 3a n'a pas été représentée dans la figure 3b. De même, la fibre illustrée dans la figure 3a et la fibre illustrée dans la figure 3b n'ont pas été représentées dans la figure 3c. Il est cependant clair que ces fibres sont présentes dans les gorges.

### EXPOSÉ DÉTAILLÉ D'UN MODE DE RÉALISATION PARTICULIER

Le principe de l'invention repose sur la mise en place de fibres continues dans des volumes représentant les parois des alvéoles de la structure alvéolaire à réaliser. Pour réaliser une structure NIDA présentant des alvéoles à base hexagonale, on utilise un dispositif de maintien comportant des tiges hexagonales espacées les unes des autres de manière à obtenir des gorges formant un motif hexagonal dans lesquelles les fibres vont être placées (voir la figure 1a).

Le dispositif de maintien peut être constitué, par exemple, d'une plaque en carbone ou d'une mousse de carbone dans laquelle on a usiné des gorges à motif hexagonal. On obtient alors un dispositif de maintien 10 constitué d'une plaque de base 11 et de tiges à base hexagonale 12a, 12b disposées régulièrement sur la plaque de base selon un motif hexagonal (voir la figure 1b).

Le dispositif de maintien peut également être constitué uniquement de tiges à base hexagonale disposées régulièrement selon un motif hexagonal, sans la plaque de base ou avec une plaque de base amovible. Il est alors nécessaire que les tiges restent fixes de sorte que les gorges 13 soient uniformes.

Les gorges 13 ont une largeur et une longueur correspondant à l'épaisseur et à la longueur des parois des alvéoles que l'on souhaite obtenir et la hauteur des gorges est supérieure à la hauteur des futures parois afin de pouvoir introduire un outil de tassement 14 (tel qu'illustré dans la figure 2 par exemple) dans les gorges et ajuster la position des fibres continues dans les gorges, cet outil de tassement formant l'empreinte des tiges du dispositif de maintien.

Le dispositif de maintien comprend, en plus d'un nombre de tiges égales au nombre d'alvéoles que l'on souhaite obtenir (tiges centrales 12a), une série de tiges situées en périphérie des tiges centrales et entourant ces tiges (tiges périphériques 12b), la distance entre n'importe quelle tige et sa tige adjacente la plus proche formant une gorge. Sur la figure 1a, le dispositif de maintien 10 comporte sept tiges centrales 12a et douze tiges périphériques 12b.

Les alvéoles obtenues au niveau des tiges périphériques pourront par la suite être éliminée car elles ne contiennent pas le même nombre de fibres que les alvéoles centrales. Dans ce cas, le dispositif de maintien 10 illustré dans la figure 1a permet de réaliser une structure NIDA possédant les sept alvéoles centrales.

L'extrémité des tiges à base hexagonale peut être usinée de manière conique ou facettée, afin de permettre un positionnement plus aisé des fibres continues dans les gorges 13 (voir figure 1b).

Le dispositif de maintien 10 peut éventuellement posséder des orifices au fond des gorges pour faciliter la désinsertion de la structure NIDA une fois formée en introduisant des tiges dans ces orifices et en leur appliquant une pression. De même, le dispositif de maintien peut être revêtu d'un agent démoulant, pour faciliter la désinsertion de la structure NIDA et pour permettre de réutiliser le dispositif de maintien.

Les tiges peuvent être revêtues de tissus ou de tresses constituées de fibres, lorsque l'on veut augmenter le taux de fibres dans la direction verticale. Ceci n'est possible que lorsque la largeur totale de la gorge est de l'ordre de 1 mm ou supérieure à cette valeur, puisque l'épaisseur d'un tissu ou d'une tresse est au minimum de 0,3 mm et qu'il y en a deux épaisseurs (deux faces de tiges) dans une gorge.

Pour rendre plus aisée leur manipulation et leur placement dans les gorges, les fibres peuvent être trempées au préalable dans une solution, par exemple dans une solution d'alcool polyvinylique dans de l'eau. La solution ayant servi à la manipulation des fibres peut par la suite être supprimée par traitement thermique une fois que la structure NIDA est réalisée.

Il est à noter qu'au lieu d'utiliser une unique fibre continue, il est possible d'utiliser un faisceau de fibres continues constitué de plusieurs fibres continues, de façon à ce que le diamètre du faisceau de fibres soit proche de l'épaisseur de la paroi que l'on souhaite obtenir, pour une mise en place plus rapide et un meilleur remplissage des gorges du dispositif de maintien.

Les fibres sont placées dans les gorges de manière manuelle ou automatique selon leur longueur.

Les fibres continues sont placées de préférence en alternant les directions, ce qui permet d'obtenir, pour une série de placement (ou couche de fibres), le même taux de fibres dans chaque paroi.

Une manière de placer les fibres dans les gorges du dispositif de maintien est illustrée dans les figures 3a à 3c. On commence par placer une fibre continue 16 dans une gorge appelée gorge x, ainsi que dans toutes les gorges présentant une orientation moyenne de 90° par rapport à la gorge x (voir la figure 3a). On place ensuite une fibre continue 17 dans les gorges ayant une orientation moyenne de -30° par rapport à la gorge x (voir la figure 3b). Enfin, on place une fibre continue 18 dans les gorges présentant une orientation moyenne de +30° par rapport à la gorge x (voir la figure 3c). On entend par orientation moyenne d'un angle de θ° une orientation de θ à + ou - 30°. Ainsi, pour une orientation moyenne de 90°, les gorges à remplir seront les gorges ayant un angle de +120° et + 60° par rapport à la gorge x.

Une fois ces étapes terminées, on peut constater que chaque gorge, au niveau des tiges centrales, comporte deux fibres. Les étapes illustrées dans ces figures 3a à 3c sont répétées jusqu'à ce qu'on obtienne une hauteur de paroi souhaitée.

En procédant ainsi, la structure a des alvéoles dont les parois ont une épaisseur constante. Les parois des alvéoles comportent également le même nombre de fibres et ont donc la même densité, et les alvéoles sont solidaires les unes avec les autres étant donné que les fibres sont continues d'une paroi à l'autre. La résistance de la structure est ainsi améliorée.

Les fibres peuvent éventuellement être tassées après avoir été placées dans les gorges. Le tassement des fibres permet d'ajuster les fibres dans les gorges et ainsi obtenir une hauteur de fibres homogène. Le tassement peut se faire à l'aide d'un outil de tassement 14 à grilles hexagonales 15 (constituant l'empreinte des tiges du dispositif de maintien (voir la figure 2)) que l'on vient emboîter dans les gorges du dispositif de maintien.

Une fois les parois réalisées, on peut éventuellement les consolider en introduisant des fibres verticales par couture ou transfert de fibres supplémentaires (par exemple, placer des fibres perpendiculairement aux fibres des parois).

Une fois qu'on a obtenu une hauteur de paroi souhaitée, on peut réaliser un cerclage extérieur de la structure NIDA en entourant les tiges périphériques du dispositif de maintien avec des fibres ou des fils, afin de maintenir la cohésion de la structure NIDA. Le cerclage pourra par la suite être supprimé par découpe ou transformé en un matériau constitutif de la structure NIDA par pyrolyse. On peut par exemple réaliser un cerclage en utilisant des fibres de carbone enduites de résine phénolique et en les polymérisant. Le cerclage extérieur permet de consolider la structure NIDA pendant le procédé de fabrication.

Enfin, une fois la structure NIDA réalisée, on retire le dispositif de maintien. Le retrait peut se faire en exerçant une poussée sur les tiges du dispositif de maintien. On peut également découper la plaque de base du dispositif de maintien au niveau de la base des tiges pour enlever le dispositif de maintien sans déformer la structure NIDA, comme nous le verrons ci-dessous.

Pour obtenir une structure NIDA à matrice organique, il suffit de suivre les étapes décrites ci-dessus soit en utilisant des fibres qui sont imprégnées par une résine avant leur placement dans les gorges du dispositif de maintien, soit en plaçant le dispositif de maintien comportant la structure NIDA obtenue dans un moule et en procédant à une injection de résine ou de polymère par RTM (technique de Transfert d'une Résine dans un Moule). La structure NIDA comprenant la résine est ensuite polymérisée, par exemple par chauffage.

Si l'on souhaite obtenir une structure NIDA à matrice carbone ou céramique, il est nécessaire de densifier la structure NIDA vierge obtenue selon les étapes ci-dessus. Pour cela, on peut effectuer un dépôt de carbone et/ou un dépôt de composés céramiques.

Pour réaliser une densification, on place le dispositif de maintien comprenant la structure NIDA dans un four et on procède à une infiltration chimique de la structure NIDA, par exemple avec du carbone ou des composés céramiques (carbure de silicium ou autres carbures) à des températures en général de l'ordre de 1000°C et avec les précurseurs gazeux adéquats jusqu'à obtenir la densification souhaitée.

A la fin d'une ou plusieurs étapes de dépôt ou de densification, les tiges périphériques ainsi que la plaque de base éventuelle du dispositif de maintien peuvent être supprimés par découpe. Les tiges centrales peuvent être supprimées par oxydation (ce qui est possible si l'on a réalisé une densification par du SiC par exemple et employé un dispositif de maintien en carbone) ou par désinsertion en exerçant une pression sur ces tiges.

Si on a réalisé un cerclage, celui-ci peut également être enlevé par découpe.

Par ailleurs, les structures NIDA peuvent éventuellement être fermées sur une face ou deux faces par un tissu qui peut être de même nature que les fibres. On obtient alors un panneau.

Le ou les tissus sont étendus sur la ou les surfaces de la structure NIDA et liés à ses parois par des coutures. Les coutures sont réalisées avec un fil qui peut être constitué des mêmes fibres qui traversent le ou les tissus et les parois de la structure NIDA.

Dans le cas où la structure est destinée à recevoir un élément tissé sur sa face supérieure et sur sa face inférieure, il peut être avantageux d'utiliser un dispositif de maintien ne présentant pas de plaque de base, mais uniquement des tiges espacées, à l'aide de bandes ou de fils disposés entre les tiges, d'un espace de même valeur que l'épaisseur de chaque paroi de la structure NIDA que l'on souhaite obtenir.

Dans le cas où la structure NIDA serait entièrement fermée par l'application d'un élément tissé sur ses faces inférieure et supérieure, il est souhaitable que le matériau constitutif des tiges du dispositif de maintien soit choisi de manière à ne pas détériorer les caractéristiques de la structure NIDA (par exemple sa légèreté) ou à pouvoir être éventuellement éliminé lors d'une étape ultérieure. Ainsi, le dispositif de maintien peut par exemple être réalisé en une mousse de carbone, si la structure NIDA finale doit être une structure NIDA carbone/carbone et que l'on cherche à obtenir une structure NIDA présentant des fonctions d'isolation thermique et de légèreté. Si la structure NIDA finale est un composite SiC/SiC, et que l'on souhaite obtenir des alvéoles vides, on peut également utiliser un dispositif de maintien réalisé dans une mousse de carbone (à porosité fermée). Le dispositif de maintien pourra alors être éliminé par oxydation sous air à une température supérieure à 500°C, après avoir réalisé une densification partielle ou totale de la structure NIDA par du SiC.

Nous allons à présent décrire la formation d'une structure NIDA composite SiC/SiC selon l'invention.

La structure NIDA que nous allons décrire comporte 19 alvéoles hexagonales de 8 mm de côté avec des parois ayant une épaisseur de 1 mm et une hauteur de 10 mm.

Pour obtenir une structure NIDA comportant 19 alvéoles, on choisit d'utiliser un dispositif réalisé en carbone et constitué d'une plaque de base et de 37 tiges à base hexagonale de 35 mm de hauteur agencées selon un motif hexagonal et usinées à leur extrémité de manière conique sur 15 mm. Le dispositif de maintien utilisé est du même type que celui qui est illustré dans les figures 1a et 1b. Les tiges sont espacées les unes des autres de manière à obtenir une épaisseur de gorge de 1 mm (avec une précision de +/-20 µm). Les gorges sont disposées à 90° par rapport à la base des tiges à +/- 0,1° près.

Les fibres utilisées pour réaliser la structure NIDA sont par exemple des fibres de SiC fournies par Hi-Nicalon. Ces fibres se présentent sous forme de mèches de 500 filaments, le diamètre unitaire des filaments étant de 14 µm et la masse linéique (Tex) d'une mèche est de 205 g/km.

Les fibres sont trempées dans une solution aqueuse d'alcool polyvinylique à 5% et sont découpées par exemple sur des longueurs de 70 cm, puis placées manuellement dans les gorges du dispositif de maintien. On peut par exemple utiliser le même principe de placement des fibres que celui illustré dans les figures 3a à 3c. On précise que la longueur des fibres est ici choisie de manière à pouvoir combler au moins une fois toutes les gorges du dispositif avec une unique fibre, compte tenu des dimensions du dispositif de maintien, mais d'autres longueurs sont également possible.

Une fois placées dans les gorges, les fibres sont ajustées dans les gorges en emboîtant un outil de tassement à grilles hexagonales dans les gorges du dispositif de maintien. Cet outil est une empreinte des tiges du dispositif de maintien ; le nombre d'ouvertures (grilles) de l'outil de tassement est donc équivalent au nombre de tiges du dispositif de maintien.

On procède ensuite à une autre série de placement et de tassement. Ces séries de placement et de tassement sont répétés jusqu'à obtenir la hauteur souhaitée pour les parois des alvéoles. Dans notre exemple, la hauteur souhaitée est atteinte après un nombre total de 30 séries.

Ensuite, on entoure les colonnes hexagonales externes à l'aide de fibres de carbone (par exemple des fibres T 300) enduites de résine phénolique et on réalise une polymérisation de l'ensemble à 250°C. A cette température, l'alcool polyvinylique utilisé pour ensimer les fibres est par ailleurs éliminé.

Puis on découpe les tiges du dispositif de maintien au niveau de leur intersection avec la plaque de base. On découpe également la partie supérieure des tiges au même niveau que la hauteur supérieure des parois de la structure NIDA. Un ajustement peut éventuellement être obtenu par polissage des faces supérieures et inférieures de la structure NIDA.

Pour obtenir un panneau comprenant une structure NIDA composite SiC/SiC, on étend un tissu de SiC de 1 mm d'épaisseur (par exemple un tissu de structure interlok) sur une des grandes faces de la structure NIDA afin de recouvrir les alvéoles, et on fixe ce tissu, par exemple en le cousant avec une mèche de 500 filaments (par exemple une mèche Hi-Nicalon) au niveau des points de contact du tissu avec les parois de la structure NIDA. Dans cet exemple, l'aiguille employée pour assembler le tissu à la structure a un diamètre de 400 µm et l'espacement entre deux coutures est de 2 mm, c'est-à-dire que sur chacun des 6 côtés des hexagones des alvéoles, il y a une couture à 1, 3, 5 et 7 mm.

L'ensemble est placé dans un four à pyrolyse afin de transformer la résine phénolique en carbone. La résine phénolique risquerait en effet de polluer le four et les structures NIDA pendant les étapes ultérieures de densification par CVI. Les conditions de pyrolyse sont une montée de 10°C par heure, sous vide, jusqu'à atteindre une température de 800°C, puis une montée à 100°C par heure entre 800°C et 1200°C, un pallier d'une heure à 1200°C, puis une descente en température de 100°C par heure.

L'ensemble ainsi obtenu est ensuite placé dans un four de densification par CVI afin de déposer une couche de carbone d'environ 0,2 µm d'épaisseur sur les parois de la structure NIDA. Les conditions de dépôt sont : T = 1000°C, P = 5 kPa, du propane comme précurseur, la durée d'introduction du propane étant de 5 minutes 30 s et un temps de séjour de 3 s. Puis on déposer une couche de SiC. Les conditions de dépôt sont : T = 950°C, P = 2 kPa, avec du méthyltrichlorosilane à 25 % dans l'hydrogène comme précurseur, la durée d'infiltration du précurseur étant de 60 h et un temps de séjour de 1 s.

Le cerclage de maintien (constitué de fibres de carbone liées entre elles par une matrice carbone issue de la pyrolyse de la résine phénolique présente sur les fibres), ainsi que les tiges périphériques du dispositif de maintien sont supprimées par découpe.

L'ensemble restant est porté dans un four (T = 550°C, sous balayage d'air, pendant une durée de 30 h) afin d'éliminer les tiges en carbone restantes (tiges centrales).

Le taux de fibres volumique dans les parois, calculé à partir du nombre de fibres placées dans les gorges et de la densité des fibres, est de 44% selon les directions x, y et z et de 4% selon une direction perpendiculaire aux directions x, y ou z (les directions x, y et z sont représentées dans la figure 1a).

La densité des parois du NIDA obtenu est de 2,55 et la porosité est de 13%.

La précision sur les cotes de l'hexagone des alvéoles est de +/- 5/100^{ème} de mm.

### BIBLIOGRAPHIE

[1] «HexWeb Honeycomb Attributes and Properties : A comprehensive guide to standard Hexcel honeycomb materials, configurations, ans mechanical properties », page 3 du document technique de la société Hexcel Composites, disponible sur le site internet www.hexcel.com (38 pages).
[2] EP 0 796 829 B1 du 17/03/97, « Procédé de fabrication d'un panneau du type nid d'abeille en composite carbone/carbone ou carbone/céramique et structures constituées à partir d'un tel panneau », Rousseau G., EADS.
[3] US 4,824,711 du 25/04/1989, « Ceramic honeycomb structures and method thereof », Cagliostro D. E., NASA.
[4] US 6,830,718 B2 du 14/12/2004, « Method of manufacturing honeycomb structures », Maumus J. P., Snecma Moteurs.

## Revendications

1. Procédé de fabrication d'une structure alvéolaire comprenant des alvéoles séparées par des parois, le procédé comprenant les étapes suivantes :
- réalisation d'un dispositif de maintien (10) comprenant des tiges (12, 12a, 12b) reproduisant la forme des alvéoles, les tiges étant séparées par des gorges (13) reproduisant la forme des parois,
- placement de fibres continues (16, 17, 18) dans les gorges (13) pour constituer les parois, chaque fibre étant placées dans plusieurs gorges successives adjacentes,
- formation d'une matrice autour des fibres de manière à lier les fibres entre elles.

2. Procédé de fabrication d'une structure selon la revendication 1, comprenant en outre, après l'étape de formation d'une matrice, une étape d'élimination du dispositif de maintien (10).

3. Procédé de fabrication d'une structure selon la revendication 1, comprenant en outre, après l'étape de placement de fibres continues dans les gorges du dispositif de maintien et avant l'étape de formation d'une matrice autour des fibres, une étape de tassement des fibres dans les gorges du dispositif de maintien.

4. Procédé de fabrication d'une structure selon la revendication 1, dans lequel le placement est réalisé avec au moins une seule et même fibre continue qui parcourt n fois de part en part le dispositif de maintien, avec n ≥ 1.

5. Procédé de fabrication d'une structure selon la revendication 4, dans lequel le placement est réalisé avec au moins une seule et même fibre continue qui parcourt toutes les gorges du dispositif de maintien.

6. Procédé de fabrication d'une structure selon la revendication 1, dans lequel l'étape de placement des fibres comprend les étapes suivantes :
- soit une gorge donnée appelée gorge x, placement d'une fibre continue dans les gorges d'orientation moyenne 90° par rapport à la gorge x,
- placement d'une fibre continue dans les gorges d'orientation moyenne -30° par rapport à la gorge x,
- placement d'une fibre continue dans les gorges d'orientation moyenne +30° par rapport à la gorge x,
une orientation moyenne de θ° correspondant à une orientation de θ à + ou - 30°.

7. Procédé de fabrication d'une structure selon l'une quelconque des revendications précédentes, dans lequel chaque gorge du dispositif de maintien comprend une seule fibre dans son épaisseur.

8. Procédé de fabrication d'une structure selon l'une quelconque des revendications 1 à 6, dans lequel plusieurs fibres sont placées dans les gorges en même temps.

9. Procédé de fabrication d'une structure selon l'une quelconque des revendications précédentes, dans lequel les alvéoles sont des cylindres ayant une base hexagonale.

10. Procédé de fabrication d'une structure selon la revendication 1, dans lequel les tiges (12, 12a, 12b) du dispositif de maintien sont disposées selon un motif hexagonal.

11. Procédé de fabrication d'une structure selon la revendication 1, dans lequel les tiges (12, 12a, 12b) du dispositif de maintien reposent sur un support, ce support étant de forme plane, conique ou cylindrique.

12. Procédé de fabrication d'une structure selon la revendication 1, dans lequel les tiges (12, 12a, 12b) du dispositif de maintien sont revêtues de tissus ou de tresses constituées de fibres.

13. Procédé de fabrication d'une structure selon la revendication 1 ou la revendication 2, comprenant en outre, après l'étape de formation d'une matrice autour des fibres, les étapes suivantes :
- placement d'un renfort fibreux sur une ou deux faces de la structure de manière à recouvrir les extrémités des alvéoles de la structure,
- fixation du renfort fibreux sur ladite ou lesdites face(s).

14. Procédé de fabrication d'une structure selon la revendication 13 lorsqu'elle dépend de la revendication 2, dans lequel le placement du renfort fibreux sur une ou deux faces de la structure est réalisé après l'étape d'élimination du dispositif de maintien.

15. Procédé de fabrication d'une structure selon la revendication 13 lorsqu'elle dépend de la revendication 2, dans lequel le placement du renfort fibreux est réalisé avant l'étape d'élimination du dispositif de maintien.

16. Procédé de fabrication d'une structure selon la revendication 1, dans lequel la matrice est obtenue par injection d'un composé thermoplastique entre les fibres placées dans le dispositif de maintien à une température inférieure à la température de stabilité des fibres et supérieure à la température de fusion du composé thermoplastique.

17. Procédé de fabrication d'une structure selon la revendication 1, dans lequel la matrice est obtenue par injection d'une résine thermodurcissable entre les fibres placées dans le dispositif de maintien et chauffage de l'ensemble ainsi obtenu jusqu'à polymérisation de la résine.

18. Procédé de fabrication d'une structure selon la revendication 1, dans lequel l'étape de formation d'une matrice comprend une étape de densification des parois de la structure par dépôt chimique en phase vapeur (CVD) ou infiltration chimique en phase vapeur (CVI) de gaz.

19. Procédé de fabrication d'une structure selon la revendication 1, dans lequel la structure alvéolaire est une structure en nid d'abeilles ou une structure dont les alvéoles ont une section de forme triangulaire ou parallélépipédique.

20. Procédé de réalisation d'une gaine de combustible nucléaire, qui comprend la mise en oeuvre d'un procédé selon l'une quelconque des revendications 1 à 19.

21. Procédé de réalisation d'un absorbeur de sons, qui comprend la mise en oeuvre d'un procédé selon l'une quelconque des revendications 1 à 19.

## Claims

1. Method for manufacturing a cellular structure comprising cells separated by walls, the method including the following steps:
- manufacturing of a retaining device (10) comprising rods (12, 12a, 12b) reproducing the shape of the cells, the rods being separated by grooves (13) reproducing the shape of the walls,
- placement of continuous fibres (16, 17, 18) in the grooves (13) to form the walls, each fibre being placed in several successive adjacent grooves,
- formation of a matrix around fibres so as to bind the fibres to each other.

2. Method for manufacturing a structure according to claim 1, further comprising an additional step, after the step in which a matrix is formed, to eliminate the retaining device (10).

3. Method for manufacturing a structure according to claim 1, further comprising a step, after the step to place continuous fibres in the grooves of the retaining device and before the step to form a matrix around the fibres, in which fibres are compacted in the grooves of the retaining device.

4. Method for manufacturing a structure according to claim 1, in which placement is done with at least one single continuous fibre that travels n times from side to side of the retaining device, where n ≥ 1.

5. Method for manufacturing a structure according to claim 4, in which placement is done with at least one single continuous fibre that passes through all the grooves of the retaining device.

6. Method for manufacturing a structure according to claim 1, in which the fibre placement step comprises the following steps:
- take a given groove called groove x, placement of a continuous fibre in the grooves with average orientation 90° relative to groove x,
- placement of a continuous fibre in the grooves with average orientation -30° relative to groove x,
- placement of a continuous fibre in the grooves with average orientation +30° relative to grooves x,
an average orientation of θ° corresponding to an orientation of θ equal to + or - 30°.

7. Method for manufacturing a structure according to any of the previous claims, in which each groove in the retaining device comprises a single fibre in its thickness.

8. Method for manufacturing a structure according to any of claims 1 to 6, in which several fibres are placed in the grooves at the same time.

9. Method for manufacturing a structure according to any of the previous claims, in which the cells are cylinders with a hexagonal base.

10. Method for manufacturing a structure according to claim 1, in which the rods (12, 12a, 12b) of the retaining device are arranged in a hexagonal pattern.

11. Method for manufacturing a structure according to claim 1, in which the rods (12, 12a, 12b) of the retaining device are supported on a support, this support being plane, conical or cylindrical in shape.

12. Method for manufacturing a structure according to claim 1, in which the rods (12, 12a, 12b) of the retaining device are coated with fabric or braids composed of fibres.

13. Method for manufacturing a structure according to claim 1 or claim 2, further comprising the following steps, after the step in which the matrix is formed around the fibres:
- placement of a fibrous reinforcement on one or two faces of the structure so as to cover the ends of the structure cells,
- fixing the fibrous reinforcement on said face(s).

14. Method for manufacturing a structure according to claim 13 when it depends on claim 2, in which placement of the fibrous reinforcement of one or both faces of the structure is done after the step in which the retaining device is eliminated.

15. Method for manufacturing a structure according to claim 13 when it depends on claim 2, in which placement of the fibrous reinforcement is done before the step in which the retaining device is eliminated.

16. Method for manufacturing a structure according to claim 1, in which the matrix is obtained by injection of a thermoplastic compound between fibres placed in the retaining device at a temperature below the fibre stability temperature and above the melting temperature of the thermoplastic compound.

17. Method for manufacturing a structure according to claim 1, in which the matrix is obtained by injection of a thermosetting resin between fibres placed in the retaining device and heating of the assembly thus obtained until polymerisation of the resin.

18. Method for manufacturing a structure according to claim 1, in which the step to form a matrix comprises a step to densify the walls of the structure by gas chemical vapour deposition (CVD) or chemical vapour infiltration (CVI).

19. Method for manufacturing a structure according to claim 1, in which the cell structure is a honeycomb structure or a structure in which the sections of the cells have a triangular or parallelepiped shape.

20. Method for producing a fuel cladding, comprising the implementation, of a method according to any one of claims 1 to 19.

21. Method for producing a sound absorber, comprising the implementation of a method according to any one of claims 1 to 19.

## Patentansprüche

1. Verfahren zur Herstellung einer zellenförmigen, durch Wände getrennte Zellen umfassenden Struktur, die folgenden Schritte umfassend:
- Realisierung einer Haltevorrichtung (10) mit die Form der Zellen wiedergebenden Schäften (12, 12a, 12b), wobei die Schäfte durch die Form der Wände wiedergebende Nuten (13) getrennt sind,
- Platzierung von kontinuierlichen Fasern (16, 17, 18) in den Nuten (13) zum Bilden der Wände, wobei jede Faser in mehreren sukzessiven benachbarten Nuten platziert wird,
- Ausbildung einer Matrix um die Fasern herum, um die Fasern miteinander zu verbinden.

2. Verfahren zur Herstellung einer Struktur nach Anspruch 1, außerdem nach dem Schritt zur Ausbildung einer Matrix einen Schritt zur Eliminierung der Haltevorrichtung (10) umfassend.

3. Verfahren zur Herstellung einer Struktur nach Anspruch 1, außerdem, nach dem Schritt zur Platzierung von kontinuierlichen Fasern in den Nuten der Haltevorrichtung und vor dem Schritt zur Ausbildung einer Matrix um die Fasern herum, einen Schritt des Zusammenpressens der Fasern in den Nuten der Haltevorrichtung umfassend.

4. Verfahren zur Herstellung einer Struktur nach Anspruch 1, bei dem die Platzierung mit wenigstens ein und derselben kontinuierlichen Faser erfolgt, die die Haltevorrichtung n-mal durchläuft, mit n ≥ 1.

5. Verfahren zur Herstellung einer Struktur nach Anspruch 4, bei dem die Platzierung mit wenigstens ein und derselben kontinuierlichen Faser erfolgt, die alle Nuten der Haltevorrichtung durchläuft.

6. Verfahren zur Herstellung einer Struktur nach Anspruch 1, bei dem der Schritt zur Platzierung der Fasern die folgenden Schritte enthält:
bei einer gegebenen Nut, Nut x genannt,
- Platzierung einer kontinuierlichen Faser in den Nuten mit einer mittleren Ausrichtung von 90° in Bezug auf die Nut x,
- Platzierung einer kontinuierlichen Faser in den Nuten mit einer mittleren Ausrichtung von -30° in Bezug auf die Nut x,
- Platzierung einer kontinuierlichen Faser in den Nuten mit einer mittleren Ausrichtung von +30° in Bezug auf die Nut x,
wobei eine mittlere Ausrichtung von θ° einer Ausrichtung von θ bis + oder - 30° entspricht.

7. Verfahren zur Herstellung einer Struktur nach einem der vorhergehenden Ansprüche, bei der jede Nut der Haltevorrichtung eine einzige Faser in ihrer Dicke enthält.

8. Verfahren zur Herstellung einer Struktur nach einem der Ansprüche 1 bis 6, bei dem gleichzeitig mehrere Fasern in den Nuten platziert werden.

9. Verfahren zur Herstellung einer Struktur nach einem der vorhergehenden Ansprüche, bei dem die Zellen Zylinder mit einer hexagonalen Basis sind.

10. Verfahren zur Herstellung einer Struktur nach Anspruch 1, bei dem die Schäfte (12, 12a, 12b) der Haltevorrichtung gemäß einem hexagonalen Muster angeordnet sind.

11. Verfahren zur Herstellung einer Struktur nach Anspruch 1, bei dem die Schäfte (12, 12a, 12b) der Haltevorrichtung auf einem Träger ruhen, wobei dieser Träger von planer, konischer oder zylindrischer Form ist.

12. Verfahren zur Herstellung einer Struktur nach Anspruch 1, bei dem die Schäfte (12, 12a, 12b) der Haltevorrichtung mit durch Fasern gebildeten Geweben oder Geflechten überzogen werden.

13. Verfahren zur Herstellung einer Struktur nach Anspruch 1 oder nach Anspruch 2, außerdem nach dem Schritt zur Ausbildung einer Matrix um die Fasern herum die folgenden Schritte umfassend:
- Platzierung einer Faserverstärkung auf einer oder zwei Seiten der Struktur, um die Extremitäten der Zellen der Struktur zu überziehen,
- Befestigung der Faserverstärkung auf der (den) genannten Seite(n).

14. Verfahren zur Herstellung einer Struktur nach Anspruch 13, wenn er von dem Anspruch 2 abhängt, bei dem die Platzierung der Faserverstärkung auf einer oder zwei Seiten der Struktur nach dem Schritt zur Eliminierung der Haltevorrichtung realisiert wird.

15. Verfahren zur Herstellung einer Struktur nach Anspruch 13, wenn er von dem Anspruch 2 abhängt, bei dem die Platzierung der Faserverstärkung vor dem Schritt zur Eliminierung der Haltevorrichtung realisiert wird.

16. Verfahren zur Herstellung einer Struktur nach Anspruch 1, bei dem man die Matrix durch Einspitzung einer thermoplastischen Verbindung zwischen die in der Haltevorrichtung platzierten Fasern bildet - bei einer Temperatur, die niedriger als die Stabilitätstemperatur der Fasern und höher als die Schmelztemperatur der thermoplastischen Verbindung ist.

17. Verfahren zur Herstellung einer Struktur nach Anspruch 1, bei dem man die Matrix durch Einspitzung eines thermoplastischen Harzes zwischen die in der Haltevorrichtung platzierten Fasern bildet und das auf diese Weise erhaltene Ganze dann erwärmt bis zur Polymerisation des Harzes.

18. Verfahren zur Herstellung einer Struktur nach Anspruch 1, bei dem der Schritt zu Bildung einer Matrix einen Schritt zur Verdichtung der Wände der Struktur durch chemische Gasphasenabscheidung (CVD) oder chemische Gasphaseninfiltration (CVI) umfasst.

19. Verfahren zur Herstellung einer Struktur nach Anspruch 1, bei dem die Zellenstruktur eine bienenwabenförmige Struktur ist, oder eine Struktur, deren Zellen einen Querschnitt von dreieckiger oder parallelepipedischer Form haben.

20. Verfahren zur Herstellung einer Kernbrennstoffhülle, das die Anwendung eines Verfahrens nach einem der Ansprüche 1 bis 19 umfasst.

21. Verfahren zur Herstellung eines Schallabsorbers, das die Anwendung eines Verfahrens nach einem der Ansprüche 1 bis 19 umfasst.
